Europäisches Patentamt

European Patent Office

Office européen des brevets

(11) Veröffentlichungsnummer: **0 387 529**
**A2**

(12) **EUROPÄISCHE PATENTANMELDUNG**

(21) Anmeldenummer: **90102758.1**

(22) Anmeldetag: **13.02.90**

(51) Int. Cl.⁵: **A01B 63/10**

(30) Priorität: **15.03.89 US 324364**

(43) Veröffentlichungstag der Anmeldung:
**19.09.90 Patentblatt 90/38**

(84) Benannte Vertragsstaaten:
**DE FR GB**

(71) Anmelder: **DEERE & COMPANY**
**1 John Deere Road**
**Moline, Illinois 61265(US)**

(72) Erfinder: **Lee, Michael Charles**
**W8643 Hemlock Road**
**Beaver Dam, Wisconsin 53916(US)**
Erfinder: **Behrens, Robert Nich**
**302 East Burnett**
**Beaver Dam, Wisconsin 53916(US)**
Erfinder: **Dobberpuhl, Dale Rudolph**
**809 Winter Street**
**Horicon, Wisconsin 53032(US)**
Erfinder: **Wykhuis, Lloyd Arnold**
**861 Alphyll Lane**
**Mayville, Wisconsin 53050(US)**

(74) Vertreter: **Feldmann, Bernhard et al**
**DEERE & COMPANY European Office, Patent**
**Department Steubenstrasse 36-42 Postfach**
**503**
**D-6800 Mannheim 1(DE)**

(54) **Flüssigkeitskreislauf mit einem Steuerventil.**

(57) Ein Flüssigkeitskreislauf weist eine Pumpe (30), einen Sammelbehälter (42), einen Hubzylinder (26) und ein Steuerventil (40) zum Anheben in eine Transportstellung und zum Absenken in eine Arbeitsstellung eines über eine Hubvorrichtung (14) an ein Fahrzeug (10) angeschlossenen Gerätes (12) auf, wobei in der Arbeitsstellung ein Teil des Gerätegewichtes auf das Fahrzeug (10) übertragbar ist, das Steuerventil (40) einen Ventilschieber, einen mit der Pumpe (30) über eine Leitung (28) verbundenen Einlaß und einen mit dem Sammelbehälter (42) über eine weitere Leitung (29) verbundenen Auslaß aufweist, der Rücklauf der Flüssigkeit aus dem Hubzylinder (26) über das Steuerventil (40) erfolgt, zum Beaufschlagen des Hubzylinders (26) mit Flüssigkeit der Ventilschieber den Einlaß im Steuerventil verschließt und der Rücklauf der Flüssigkeit aus dem Hubzylinder (26) über den Einlaß im Steuerventil (40) erfolgt.

FIG. 1

## Flüssigkeitskreislauf mit einem Steuerventil

Die Erfindung bezieht sich auf einen Flüssigkeitskreislauf mit einer Pumpe, einem Sammelbehälter, einem Hubzylinder und einem Steuerventil zum Anheben in eine Transportstellung und zum Absenken in eine Arbeitsstellung eines über eine Hubvorrichtung an ein Fahrzeug angeschlossenen Gerätes, wobei in der Arbeitsstellung zumindest ein Teil des Gerätegewichtes auf das Fahrzeug übertragbar ist, das Steuerventil einen Ventilschieber, einen mit der Pumpe über eine Leitung verbundenen Einlaß und einen mit dem Sammelbehälter über eine weitere Leitung verbundenen Auslaß aufweist und der Rücklauf der Flüssigkeit aus dem Hubzylinder über das Steuerventil erfolgt.

Ein derartiger Flüssigkeitskreislauf (US-A-2 958 384) weist ein einziges über einen Stellhebel betätigbares Steuerventil auf, das in seiner zentralen Ventilbohrung den in Längsrichtung verstellbaren Ventilschieber aufnimmt und in das eine weitere zur zentralen Ventilbohrung parallel verlaufende, mit dem Hubzylinder in Verbindung stehende Zuführbohrung eingearbeitet ist, die über eine erste und eine zweite Radialbohrung an die Ventilbohrung angeschlossen ist. Zwischen der ersten und zweiten Radialbohrung ist in der Zuführbohrung ein zum Hubzylinder öffnendes Rückschlagventil vorgesehen, wobei der Steuerschieber, der mit axialen Durchgangsbohrungen versehen ist, eine Länge aufweist, die dem Abstand der Radialbohrungen entspricht. An die Stirnseite des Ventilschiebers ist noch ein im Durchmesser wesentlich kleineres Stangenteil angeschlossen, auf dem ein unter der Wirkung einer Feder stehender Kolben mit einem Außendurchmesser, der dem Innendurchmesser der Ventilbohrung entspricht, verschiebbar aufsitzt und gegen einen Anschlag an dem Stangenteil zur Anlage kommen kann. Der Ventilschieber kann fünf verschiedene Stellungen einnehmen, und zwar eine erste Stellung, in der der Ventilschieber die zweite Radialbohrung und den Auslaß verschließt, so daß Druckflüssigkeit von dem Einlaß zu dem Hubzylinder und zu den Kolben fließen kann. Das Arbeitsgerät wird in dieser Stellung in seine Transportstellung angehoben. In einer zweiten Stellung verschließt der Ventilschieber die beiden Radialbohrungen, und Flüssigkeit kann von der Pumpe durch den Einlaß und durch die Durchgangsbohrungen im Ventilschieber zu dem Auslaß strömen. In dieser Stellung kann keine Flüssigkeit aus dem Hubzylinder zurückfließen. In einer dritten Stellung verschließt der Ventilschieber die erste Radialbohrung, und Flüssigkeit kann aus dem Hubzylinder über die zweite Radialbohrung in den Auslaß gelangen, wobei ebenso wie in der zweiten Stellung Flüssigkeit von der Pumpe über die Durchgangsbohrungen zu dem Auslaß strömt. In dieser Stellung wird ein angeschlossenes Arbeitsgerät abgesenkt. In einer vierten und fünften Stellung des Ventilschiebers ist die erste Radialbohrung verschlossen und der Auslaß durch den Kolben zumindest teilweise. In diesen Stellungen wirkt der Auslaß als Drossel, und unter Druck stehende Flüssigkeit beaufschlagt den auf dem Stangenteil verschiebbaren Kolben und zusätzlich den Hubzylinder, so daß, je nachdem wie stark die Auslaßöffnung durch den Kolben verschlossen ist, eine mehr oder weniger große Gewichtsverlagerung auf das Fahrzeug stattfindet. Dieser bekannte Flüssigkeitskreislauf dient zum Anheben oder Absenken eines an einen Ackerschlepper angebauten Pfluges und weist ein aufwendig ausgebildetes Steuerventil auf, das eine verzögerte Ansprechzeit hat, da zumindest beim Anheben des Pfluges verschiedene Druckräume mit Flüssigkeit aufgefüllt werden müssen. Das Absenken erfolgt schlagartig und kann zu Beschädigungen des angeschlossenen Gerätes führen. Der Einlaß des Steuerventils ist in jeder Betriebsstellung mit der Pumpe verbunden.

Die mit der Erfindung zu lösende Aufgabe wird darin gesehen, das für einen Flüssigkeitskreislauf vorgesehene Steuerventil vorteilhafter auszubilden, und insbesondere dar in, die Ansprechzeit beim Beaufschlagen eines Hubzylinders zu verkürzen. Diese Aufgabe ist dadurch gelöst worden, daß zum Beaufschlagen des Hubzylinders mit Flüssigkeit bzw. zum Anheben des Gerätes der Ventilschieber den Einlaß im Steuerventil verschließt und der Rücklauf der Flüssigkeit aus dem Hubzylinder über den Einlaß im Steuerventil erfolgt. Auf diese Weise kann beim Beaufschlagen des Hubzylinders die Flüssigkeit das Steuerventil nicht mehr durchströmen, sondern gelangt von der Pumpe unmittelbar in den Druckraum des Hubzylinders, wodurch dieser sofort und verzögerungsfrei anspricht. Diese Maßnahme ermöglicht es darüber hinaus, daß das Steuerventil einfacher ausgebildet werden kann, da zusätzliche Kanäle im Steuerventil entfallen können, insbesondere wenn der Rücklauf der Flüssigkeit aus dem Hubzylinder über den Einlaß erfolgt, wo diese Flüssigkeit mit der von der Pumpe kommenden zusammengeführt wird. Das Umgehen eines einstellbaren Steuerventils, das ausschließlich zur Gewichtsverlagerung dient, beim Beaufschlagen eines Hubzylinders ist aus einer anderen Ausführungsform des gattungsmäßig berücksichtigten Dokuments bekannt. Doch ist hier zumindest ein weiteres Ventil zum Absenken eines Gerätes vorgesehen.

Besonders vorteilhaft läßt sich der erfindungsgemäße Flüssigkeitskreislauf bei einem selbstfahrenden Gartenschlepper mit angeschlossenem Rasenmäher einsetzen, wo es beispielsweise beim Überfahren von Böschungen oder Begrenzungssteinen darauf ankommt, den Rasenmäher blitzschnell in seine Transportstellung zu verstellen.

Nach einem weiteren erfindungsgemäßen Vorschlag kann in dem Ventilschieber eine einstellbare Blende vorgesehen sein, die in einer Endstellung des Ventilschiebers mit dem Einlaß und dem Auslaß des Steuerventils verbunden ist, so daß der Rücklauf der Flüssigkeit aus dem Hubzylinder über die einstellbare Blende erfolgt und ein kontrolliertes Absenken des Arbeitsgerätes möglich ist. Beschädigungen am Gerät werden dadurch vermieden. Gleichzeitig dient die einstellbare Blende zur Übertragung eines Teils des Gerätegewichts auf das Fahrzeug.

Bedienungsfehler lassen sich leicht dadurch ausschließen, daß der Einlaß des Steuerventils durch Längsverstellen des Ventilschiebers in seiner Ventilbohrung verschließbar und die Blende durch Drehen eines Betätigungsteils für den Ventilschieber einstellbar ist. Zusätzlich ergibt sich hierdurch der Vorteil, daß durch die Drehbewegung eine dosierte Einstellung der Blende möglich ist, während die Längsbewegung in Sekundenbruchteilen ausgeführt werden kann.

Im einzelnen kann der Ventilschieber eine Sackbohrung aufweisen, die an ihrem unteren Ende mit einem Ventilsitz versehen ist, der in der Endstellung des Ventilschiebers mit dem Einlaß und dem Auslaß des Steuerventils in Verbindung steht und dessen Öffnung durch einen Ventilkegel einstellbar ist, so daß der Ventilschieber in einfacher Weise mit dem hinter der Sackbohrung verbleibenden Vollstück den Einlaß verschließen kann, wozu nur ein ganz geringer Verschiebeweg erforderlich ist. Ventilkegel und Ventilsitz bilden dabei die einstellbare Blende innerhalb des Ventilschiebers.

Zur Einstellung der Blende kann in die Sackbohrung des Ventilschiebers ein mit dem Betätigungsteil verbundener Stellteil einschraubbar sein, der über eine Feder auf den Ventilkegel wirkt. Durch Drehen des Stellteils wird dann die Durchtrittsöffnung für die Flüssigkeit zwischen Ventilsitz und Ventilkegel vergrößert oder verkleinert, so daß ein mehr oder weniger schnelles Absenken eines angeschlossenen Gerätes bzw. eine größere oder kleinere Gewichtsverlagerung möglich ist.

Dadurch, daß der Ventilschieber aus seiner Endstellung, in der die Blende mit dem Einlaß und dem Auslaß des Steuerventils verbunden ist, gegen die Wirkung einer Feder in seine Stellung verstellbar ist, in der der Ventilschieber den Einlaß des Steuerventils verschließt, kann er über die Feder aus dieser letztgenannten Stellung selbsttätig in die Endstellung zurückgeführt werden, sobald die Bedienungsperson den Stellteil losläßt.

Vorteilhaft kann der Stellteil einen Sicherungsring aufweisen, der gegen die Oberseite der Sackbohrung und die Unterseite eines die Ventilbohrung einenends verschließenden Lagerstopfens, durch den der Stellteil nach außen aus der Ventilbohrung ragt, zur Anlage bringbar ist. Auf diese Weise sind die Verschiebewege von Ventilschieber und Stellteil in jeweils einer Richtung begrenzt, wobei der Verschiebeweg des Ventilschiebers in die andere Richtung durch einen zweiten Lagerstopfen begrenzt ist, gegen den der Ventilschieber in seiner Endstellung, in der die Blende mit dem Einlaß und dem Auslaß in Verbindung steht, anliegt.

In der Zeichnung ist ein nachfolgend näher erläutertes Ausführungsbeispiel der Erfindung dargestellt. Es zeigt:

Fig. 1 ein Fahrzeug mit angeschlossenem Gerät in Seitenansicht und einen schematisch dargestellten Flüssigkeitskreislauf,

Fig. 2 ein Steuerventil für den Flüssigkeitskreislauf in der Ansicht von rückwärts,

Fig. 3 einen Schnitt durch das Steuerventil nach Fig. 2 und

Fig. 4 eine Draufsicht auf das Steuerventil nach Fig. 2.

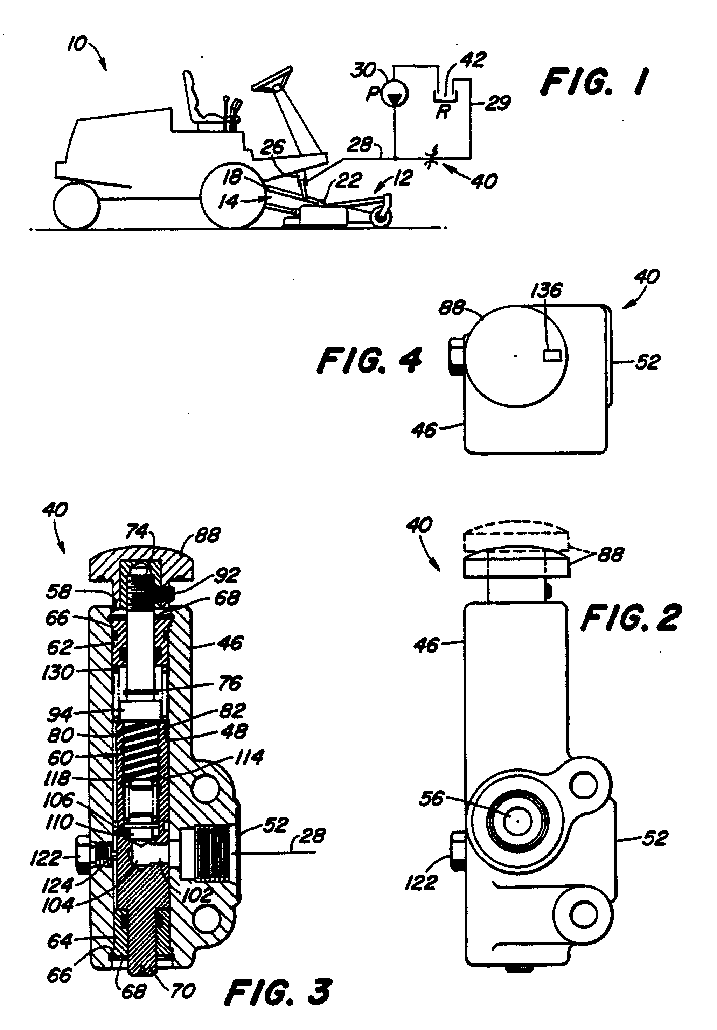

In der Fig. 1 der Zeichnung ist ein Fahrzeug 10 mit frontseitig angeschlossenem Gerät 12 dargestellt. Zum Anschluß dient eine Hubvorrichtung 14 mit Hubarmen 18, die vertikal schwenkbar mit dem frontseitigen Ende des Fahrzeugrahmens verbunden sind und sich nach vorne zu einer Anschlußstelle 22 am Gerät 12 erstrecken. Ein hydraulisch beaufschlagbarer Hubzylinder 26 greift mit seinem zylinderseitigen Ende an dem Fahrzeugrahmen an, während sein kolbenseitiges Ende mit der Hubvorrichtung 14 verbunden ist. In der Fig. 1 der Zeichnung ist das Gerät 12 als Rasenmäher und das Fahrzeug 10 als Gartenschlepper dargestellt. Andere Kombinationen, wie beispielsweise ein Ackerschlepper mit rückwärtig angeschlossenem Pflug, lassen sich ebenfalls mit dem nachfolgend zu beschreibenden Flüssigkeitskreislauf einsetzen.

Der Hubzylinder 26 ist über eine Leitung 28 mit einer Flüssigkeitsquelle, im Ausführungsbeispiel mit einer Pumpe 30, verbunden, die am Fahrzeug 10 angeordnet ist und Flüssigkeit, wie Öl, aus einem Sammelbehälter 42 ansaugen kann, und ein von einer Bedienungsperson verstellbares Steuerventil 40 ist über eine weitere Leitung 29 an den Sammelbehälter 42 und zusätzlich noch an die Leitung 28 angeschlossen.

Je nach der Stellung des Steuerventils 40 kann der Hubzylinder 26 mit Druckflüssigkeit beaufschlagt werden, um das Gerät 12 aus der in Fig. 1 gezeigten Arbeitsstellung in eine angehobene Transportstellung zu verschwenken oder um den Rückfluß aus dem Hubzylinder 26 zu ermöglichen, um das Gerät 12 aus seiner Transportstellung wieder in seine Arbeitsstellung zu verbringen. Dabei kann das Steuerventil 40 so eingestellt werden, daß es in der Arbeitsstellung des Gerätes 12 einen mehr oder weniger großen Anteil seines Gewichtes auf das Fahrzeug 10 überträgt. Das Steuerventil 40 wird vorzugsweise am Armaturenbrett des Fahrzeuges angebracht, zumindest aber so, daß es sich in Reich weite einer Bedienungsperson befindet, und weist einen einzigen Betätigungsteil auf, der in zwei verschiedene Richtungen von der Bedienungsperson betätigt werden kann, was nachfolgend noch näher dargelegt wird. Der Flüssigkeitskreislauf ist ein sogenannter geschlossener, und der Hubzylinder 26 ist ständig mit der Pumpe 30 verbunden. Nur abströmende Flüssigkeit tritt durch das Steuerventil 40 durch. Wenn die Bedienungsperson das Steuerventil 40 in der einen Richtung betätigt, so läßt sich eine Durchtrittsöffnung im Steuerventil für das aus dem Hubzylinder 26 in den Sammelbehälter 42 durch diese Durchtrittsöffnung fließende Öl verändern, wodurch je nach der Einstellung ein Gewichtsanteil des Gerätes auf das Fahrzeug übertragen wird. Letztlich kann das Gerät bei dieser Richtungsbewegung sogar eine Schwimmstellung in seiner Arbeitsstellung einnehmen. Bei der anderen Richtungsbewegung durch die Bedienungsperson wird der Flüssigkeitsdurchfluß durch das Steuerventil 40 unterbunden, und alle von der Pumpe 30 geförderte Druckflüssigkeit strömt in den Hubzylinder 26, wodurch dessen Kolbenstange eingefahren wird und die Hubarme 18 nach oben zum Anheben des Gerätes in seine Transportstellung verschwenken. Die letztgenannte Richtungsbewegung soll vorzugsweise gegen die Wirkung einer starken Feder erfolgen, damit sich das Steuerventil nach dem Loslassen des Betätigungsteils sofort wieder in seine Ausgangslage verstellt.

Unter Bezugnahme auf die Fig. 2 - 4 wird nachfolgend der Aufbau des Steuerventils 40 erläutert. Im Ausführungsbeispiel weist das Steuerventil 40 ein Ventilgehäuse 46 mit einer zentralen Ventilbohrung 48 auf, in deren unteren Teil ein radialer Einlaß 52 mündet, der an die Leitung 28 angeschlossen ist. Ein mit der Leitung 29 verbundener Auslaß 56 (Fig. 2) ist an der Rückseite des Steuerventils 40 vorgesehen und mündet ebenfalls radial in die Ventilbohrung 48 an einer Stelle, die etwas oberhalb des Einlasses 52 liegt.

Ein in Fig. 3 dargestellter Ventilschieber 60 ist verschiebbar in der Ventilbohrung 48 angeordnet und wird an seinem unteren Ende von einem Lagerstopfen 64 dichtend aufgenommen. Der Lagerstopfen 64 schließt das untere Ende der Ventilbohrung 48 ab, während ihr oberes Ende durch einen weiteren Lagerstopfen 62 verschlossen ist. Damit keine Flüssigkeit austreten kann, sind entsprechende Dichtungen an den Lagerstopfen 62 und 64 vorgesehen. Die Enden der Ventilbohrung 48 sind etwas aufgebohrt, so daß Schultern entstehen, gegen die Kragen 66 an den Lagerstopfen 62 und 64 anliegen. An den den Kragen 66 abgelegenen Seiten werden die Lagerstopfen 62 und 64 durch Sprengringe 68 in ihrer Position gesichert. Das untere Ende des Ventilschiebers 60 weist einen Teil 70 mit verringertem Durchmesser auf, der in dem unteren Lagerstopfen 64 verschiebbar aufgenommen ist. Auch hier sind entsprechende Dichtungen vorgesehen. Ein mit Gewinde versehener Schaft 74 erstreckt sich von dem oberen Ende des Ventilschiebers 60 nach oben durch die Mitte des oberen Lagerstopfens 62 und tritt am oberen Ende des Ventilgehäuses 46 aus diesem aus. Ein Sicherungsring 76 ist an dem Schaft 74 angebracht und kann gegen die Unterseite des oberen Lagerstopfens 62 zur Anlage kommen, wodurch die nach oben gerichtete Bewegung des Ventilschiebers 60 begrenzt wird. Die nach unten gerichtete Bewegung des Ventilschiebers 60 wird durch den unteren Lagerstopfen 64 begrenzt, der verhindert, daß der Ventilschieber 60 über seine normale in Fig. 3 dargestellte Arbeitsstellung nach unten hinaus verschoben werden kann.

Das obere Ende des Ventilschiebers 60 ist mit einer Sackbohrung versehen, deren oberer Teil wiederum ein Innengewinde 80 aufweist, in das ein Stellteil 82 eingeschraubt ist. Das untere Ende des Schaftes 74 ist mit dem Stellteil 82 fest verbunden und bildet mit diesem eine Einheit, weshalb in den Ansprüchen lediglich von dem Stellteil 82 die Rede ist. Auf das obere Ende des Schafts 74 kann noch ein Steuerknopf 88 aufgeschraubt werden, der durch eine Stellmutter 92 gesichert wird. Durch eine Drehbewegung des Steuerknopfes im Uhrzeigerdrehsinn wird der Stellteil 82 in den Ventilschieber 60 hineingedreht, wobei er nach unten in den unteren Bereich des Ventilschiebers wandert. Durch eine Drehung des Steuerknopfes 88 entgegen dem Uhrzeigerdrehsinn wird der Stellteil 82 mit Bezug auf den Ventilschieber 60 in dessen Sackbohrung nach oben wandern. Über einen Anschlagring 94, der einen kleineren Durchmesser als die Ventilbohrung 48 aufweist und durch den der Schaft 74 geführt ist, wird das obere Ende der Sackbohrung verschlossen. Der Anschlagring 94 ist dabei mit dem Ventilschieber 60 fest verbunden, und der Sicherungsring 76 kann gegen die Oberseite des Anschlagringes 94 zur Anlage kommen, wodurch der Weg begrenzt wird, um den der Stellteil 82 nach unten in die Sackbohrung hineingeschraubt werden kann. Der Weg nach oben wird durch die Unterseite des Anschlagringes 94 begrenzt, da das Gewinde am Stellteil 82 dann gegen diese zur Anlage kommen kann. Damit ist die aus Schaft 74, Stellteil 82 und Steuerknopf 88 bestehende Einheit in dem Ventilschieber 60 begrenzt auf und ab durch Drehen verstellbar.

Unterhalb der Sackbohrung ist in den Ventilschieber 60 noch eine Radialbohrung 102 eingearbeitet, die in der in Fig. 3 dargestellten Arbeitsstellung zu dem Einlaß 52 ausgerichtet und damit mit diesem verbunden ist. Die Radialbohrung 102 verläuft von ihrem offenen Ende etwa bis zur Mitte des Ventilschiebers 60 und mündet dort in eine Axialbohrung 104, die mit einer Blende 106 im Boden der Sackbohrung in Verbindung steht. Die Blende 106 ist im Ausführungsbeispiel durch einen im Boden der Sackbohrung eingearbeiteten Ventilsitz gebildet und wirkt mit einem Ventilkegel 110 zusammen, wobei in der Sackbohrung noch eine Radialbohrung vorgesehen ist, die in der in Fig. 3 dargestellten Position die Sackbohrung mit dem Auslaß 56 verbindet. Flüssigkeit kann damit in der in Fig. 3 dargestell ten Arbeitsstellung des Steuerventils 40 von dem Einlaß 52 über die Radialbohrung 102, die Axialbohrung 104, die Blende 106 und die weitere nicht dargestellte Radialbohrung in der Sackbohrung zum Auslaß 56 gelangen. Die Öffnungsweite der Blende 106 ist einstellbar, da der Ventilkegel 110 unter der Wirkung einer Feder 114 steht, die zwischen dem Ventilkegel 110 und dem unteren Ende des Stellteils 82 vorgesehen und damit bestrebt ist, den Ventilkegel 110 in Richtung auf den Ventilsitz zu drücken. Da der Stellteil 82 in der Sackbohrung bzw. im Ventilschieber 60 auf und ab verstellt werden kann, wird durch ein Hineinschrauben des Stellteils 82 in die Sackbohrung die Feder 114 immer mehr gespannt, wodurch die auf den Ventilkegel 110 einwirkende Kraft immer größer wird. Ein Herausschrauben des Stellteils 82 in den vorgegebenen Grenzen hat die umgekehrte Wirkung. Durch Verstellen des Stellteils 82 läßt sich damit die Drosselwirkung der Blende 106 verändern, die am größten ist, wenn der Sicherungsring 76 gegen den Anschlagring 94 zur Anlage kommt.

Um ein Drehen des Ventilschiebers 60 in seiner Ventilbohrung 48 zu verhindern, ist in den Mantel des Ventilschiebers eine Längsnut 118 eingearbeitet, in die ein Vorsprung 124 an einem Stopfen 122 eingreift, der in das Ventilgehäuse 46 an der dem Einlaß 52 gegenüberliegenden Seite eingeschraubt ist. Infolge der Längsnut 118 ist eine Axialverstellung des Ventilschiebers 60 nach wie vor möglich.

Schließlich ist noch zwischen der Unterseite des oberen Lagerstopfens 62 und dem oberen Ende des Ventilschiebers 60 eine Feder 130 vorgesehen, die damit bestrebt ist, den Ventilschieber in seine in Fig. 3 dargestellte Stellung zu drücken, in der der Einlaß 52 mit der Radialbohrung 102 in Verbindung steht. Durch Ziehen des Steuerknopfes 88 nach oben (gestrichelte Linien in Fig. 2) wird der Ventilschieber 60 in seiner Ventilbohrung 48 so weit nach oben verstellt, bis der Sicherungsring 76 gegen die Unterseite des oberen Lagerstopfens 62 zur Anlage kommt. In dieser Stellung des Ventilschiebers ist die Radialbohrung 102 nicht mehr mit dem Einlaß 52 verbunden, und der Einlaß 52 wird durch den Mantel des Ventilschiebers 60 verschlossen. Ein Flüssigkeitsdurchfluß durch das Steuerventil 40 ist dann unterbunden, und alle von der Pumpe 30 geförderte Druckflüssigkeit gelangt über die Leitung 28 zu dem Hubzylinder 26, dessen Kolbenstange dabei eingefahren wird und das Gerät 12 in seine Transportstellung anhebt. Ein nicht dargestelltes Überdruckventil verhindert, daß bei diesem Vorgang Schäden im System auftreten. Sobald der Steuerknopf 88 wieder losgelassen wird, führt die Feder 130 den Ventilschieber 60 in seine in Fig. 3 wiedergegebene Position zurück, in der der Hubzylinder 26 wieder mit dem Einlaß 52 verbunden ist. In dieser Stellung wird das Gerät 12 in seine Arbeitsposition zurückgeschwenkt, und zwar mit einer Geschwindigkeit, die durch die vorgewählte Einstellung der Blende 106 vorgegeben ist. Je nach der Einstellung der Blende 106 wird dann auch in der Arbeitsstellung des Gerätes 12 ein Teil seines Gewichtes auf das Fahrzeug 10 übertragen. Durch Drehen des Steuerknopfes 88 im Uhrzeigerdrehsinn läßt sich der auf das Fahrzeug 10 zu übertragende Gewichtsanteil weiter vergrößern, bis die sogenannte Schwimmstellung erreicht ist, in der der Sicherungsring 76 gegen die Oberseite des Anschlagringes 94 anliegt und in der die Spannung der Feder 114 am größten ist. Soll dagegen weniger Gewichtsanteil übertragen werden, so muß der Steuerknopf 88 lediglich entgegen dem Uhrzeigerdrehsinn verdreht werden, wodurch die Feder 114 mehr oder weniger entspannt wird. Dadurch wird die Öffnung der Blende 106 bzw. der Ventilkegel 110 mit weniger Kraft beaufschlagt, und mehr Flüssigkeit kann aus dem Hubzylinder 26 austreten. Eine Anzeige 136 (Fig. 4) ist auf der Oberseite des Steuerknopfes 88 vorgesehen, aus der die Bedienungsperson die Einstellung der Blende 106 erkennen kann. Durch die vorgesehenen Anschlagmittel kann der Steuerknopf 88 um etwas weniger als 360° gedreht werden.

Bei jeder Einstellung der Blende 106 ist die Bedienungsperson in der Lage, das Gerät blitzschnell aus seiner Arbeitsstellung anzuheben, wenn beispielsweise ein kleinerer Hügel, eine Bordkante etc. überwunden werden muß. Die Bedienungsperson braucht dann lediglich den Steuerknopf 88 nach oben zu ziehen, wodurch der Einlaß verschlossen wird und alle Flüssigkeit über die Leitung 28 zu dem Hubzylinder 26 gelangt. Die Blende 106 ist so bemessen, daß in der in Fig. 3 dargestellten Arbeitsstellung des Steuerventils 40 ein Ausheben des Gerätes 12 unmöglich ist. Die Feder 130 ist so bemessen, daß zu ihrem Spannen beim Hochziehen des Ventilschiebers 60 schon einige Kraft aufzuwenden ist, um die Bedienungsperson zu zwingen, den Steuerknopf möglichst schnell wieder loszulassen, damit das Gerät in seine Arbeitsstellung zurückkehren kann. Für Transportfahrten mit ausgehobenem Gerät ist es denkbar, den Steuerknopf 88 in der in Fig. 2 in strichlinierten Linien angedeuteten Stellung festzusetzen. Auch ist es ebenfalls möglich, den Einlaß 52 durch Herunterdrücken des Ventilschiebers zu verschließen. Die Feder 130 wäre dann lediglich an einer anderen Stelle, beispielsweise zwischen dem unteren Lagerstopfen 64 und dem Ventilschieber, vorzusehen. Die Einstellung der Blende 106 durch Drehen wird bevorzugt, doch kann sie auch durch ein zusätzliches Betätigungsteil verstellt werden.

**Ansprüche**

1. Flüssigkeitskreislauf mit einer Pumpe (30), einem Sammelbehälter (42), einem Hubzylinder (26) und einem Steuerventil (40) zum Anheben in eine Transportstellung und zum Absenken in eine Arbeitsstellung eines über eine Hubvorrichtung (14) an ein Fahrzeug (10) angeschlossenen Gerätes (12), wobei in der Arbeitsstellung zumindest ein Teil des Gerätegewichtes auf das Fahrzeug (10) übertragbar ist, das Steuerventil (40) einen Ventilschieber (60), einen mit der Pumpe (30) über eine Leitung (28) verbundenen Einlaß (52) und einen mit dem Sammelbehälter (42) über eine weitere Leitung (29) verbundenen Auslaß (56) aufweist und der Rücklauf der Flüssigkeit aus dem Hubzylinder (26) über das Steuerventil (40) erfolgt, dadurch gekennzeichnet, daß zum Beaufschlagen des Hubzylinders (26) mit Flüssigkeit bzw. zum Anheben des Gerätes (12) der Ventilschieber (60) den Einlaß (52) im Steuerventil (40) verschließt und der Rücklauf der Flüssigkeit aus dem Hubzylinder (26) über den Einlaß (52) im Steuerventil (40) erfolgt.

2. Flüssigkeitskreislauf nach Anspruch 1, dadurch gekennzeichnet, daß in dem Ventilschieber (60) eine einstellbare Blende (106) vorgesehen ist, die in einer Endstellung des Ventilschiebers (60) mit dem Einlaß (52) und dem Auslaß (56) des Steuerventils (40) verbunden ist.

3. Flüssigkeitskreislauf nach Anspruch 1 oder 2, dadurch gekennzeichnet, daß der Einlaß (52) des Steuerventils (40) durch Längsverstellen des Ventilschiebers (60) in seiner Ventilbohrung (48) verschließbar und die Blende (106) durch Drehen eines Betätigungsteils für den Ventilschieber (60) einstellbar ist.

4. Flüssigkeitskreislauf nach einem oder mehreren der vorherigen Ansprüche, dadurch gekennzeichnet, daß der Ventilschieber (60) eine Sackbohrung aufweist, die an ihrem unteren Ende mit einem Ventilsitz versehen ist, der in der Endstellung des Ventilschiebers (60) mit dem Einlaß (52) und dem Auslaß (56) des Steuerventils (40) in Verbindung steht und dessen Öffnung durch einen Ventilkegel (110) einstellbar ist.

5. Flüssigkeitskreislauf nach Anspruch 4, dadurch gekennzeichnet, daß in die Sackbohrung des Ventilschiebers (60) ein mit dem Betätigungsteil verbundener Stellteil (82) einschraubbar ist, der über eine Feder (114) auf den Ventilkegel (110) wirkt.

6. Flüssigkeitskreislauf nach einem oder mehreren der vorherigen Ansprüche, dadurch gekennzeichnet, daß der Ventilschieber (60) aus seiner Endstellung, in der die Blende (106) mit dem Einlaß (52) und dem Auslaß (56) des Steuerventils (40) verbunden ist, gegen die Wirkung einer Feder (130) in seine Stellung verstellbar ist, in der der Ventilschieber (60) den Einlaß des Steuerventils (40) verschließt.

7. Flüssigkeitskreislauf nach einem oder mehreren der vorherigen Ansprüche, dadurch gekennzeichnet, daß der Stellteil (82) einen Sicherungsring (76) aufweist, der gegen die Oberseite der Sackbohrung und die Unterseite eines die Ventilbohrung (48) einenends verschließenden Lagerstopfens (62), durch den der Stellteil (82) nach außen aus der Ventilbohrung (48) ragt, zur Anlage bringbar ist.

*FIG. 1*

*FIG. 4*

*FIG. 2*

*FIG. 3*